# EUROPEAN PATENT APPLICATION

(11) **EP 4 394 012 A1**
(43) Date of publication of application: **03.07.2024**
(21) Application number: 22217423.7
(22) Date of filing: 30.12.2022
(51) Int. Cl.: C09J 1/02, B22C 1/18, C04B 28/26, C04B 40/02

(54) **ADHESIVE, ESPECIALLY FOR FOUNDRY MOLDS AND CORES AND USE OF SODIUM-POTASSIUM BINDER FOR GLUE, ESPECIALLY FOR CASTING MOLDS AND CORES**

(71) Applicant: Prec-odlew spólka z ograniczona odpowiedzialnoscia, 32-050 Skawina (PL)
(72) Inventor: Kozien, Malgorzata, 32-050 Skawina (PL)
(74) Representative: Bartula-Toch, Marta

(57) **Abstract**

The object of the invention is an adhesive, especially for casting molds and cores. The adhesive consists of a binder composed of potassium water glass and two types of sodium water glass, in addition to iron red, quartz flour and kaolin. The invention also describes the use of a sodium-potassium binder for an adhesive, especially for molds and casting cores.

## Description

The object of the invention is an adhesive, especially for casting moulds and cores, and the use of a sodium-potassium binder for the adhesive, especially for casting moulds and cores.

Adhesives based on hydrated sodium silicate are known to be in widespread use.

The description of the invention CN111718175A discloses a CO2-curable inorganic binder and a method of making it. The liquid binder according to the invention comprises a sodium silicate solution, a potassium silicate solution, aluminium phosphate, potassium hydroxide and sodium hydroxide.

From the description of the invention US2016264469A1, there is known an inorganic molding compound binding composition comprising a modified alkali metal silicate mixture which contains at least one of the alkali silicates selected from the group consisting of sodium silicate, potassium silicate and lithium silicate, and wherein the crosslinking agent is tetraethyl orthosilicate.

The essence of the solution according to the first invention is that it contains a binder which consists of potassium water glass M 3.0 - 3.4 with a density of 1.38 to 1.42 g/cm³ in an amount of 5 to 15%, sodium water glass M 3.3 ± 0.1 with a density of 1.33 g/cm³ in an amount of 35 to 60% and sodium water glass M 2,5 ± 0.1 with a density of 1.45 g/cm³ in an amount of 35 to 60%, with a binder content of 20 to 60% by weight in the adhesive, in addition iron red in an amount of 0.5 to 3% by weight, quartz flour in an amount of 10 to 20% by weight and aluminosilicates in an amount of 30 to 40% by weight.
Advantageously, the aluminosilicates contain not less than 80 per cent kaolinite by weight.
Advantageously, all bulk ingredients have a fineness of 160 to 220 mesh.

The essence of the solution according to the second invention is the use of a binder, consisting of potassium water glass M 3.0 - 3.4 with a density of 1.38 to 1.42 g/cm³ in an amount of 5 to 15%, sodium water glass M 3,3 ± 0.1 with a density of 1.33 g/cm³ in an amount of 35 to 60%, and sodium water glass M 2.5 ± 0.1 with a density of 1.45 g/cm³ in an amount of 35 to 60% for the manufacture of glue, especially for moulds and casting cores.
Advantageously, a binder of 20 to 60% by weight is used to make the adhesive
Advantageously, once the binder has been prepared, the bulk components of the adhesive are added, with a fineness of 160 to 220 mesh.

The advantage of the solution according to the invention is that it is possible to obtain adhesives with new and different properties, including different setting times and different strength parameters as required. The adhesive is characterised by high bonding strength and, in addition, its binder is an inorganic material based on hydrated sodium and potassium silicates. The role of the adhesive is to provide a high bond strength to ceramics at high temperatures, where organic substances lose strength.

Solutions according to the inventions are illustrated by the following implementation examples:

### Example I

The binder contains:
- aqueous potassium glass M 3,0 - 3,4 with a density of 1,42 g/cm3 , in an amount of 15 % by weight
- Soda water glass M 3.3 ± 0.1 with a density of 1.33 g/cm3 at 50% by weight,
- Soda water glass M 2.5 ± 0.1 with a density of 1.45 g/cm3 at 35% by weight.

### Example II

The binder contains:
- aqueous potassium glass M 3,0 - 3,4 with a density of 1,40 g/cm3 , in an amount of 5 % by weight
- Soda water glass M 3.3 ± 0.1 with a density of 1.33 g/cm3 at 35% by weight,
- Soda water glass M 2.5 ± 0.1 with a density of 1.45 g/cm3 , 60 % by weight.

### Example III

A binder-based adhesive containing:
- aqueous potassium glass M 3,0 - 3,4 with a density of 1,39 g/cm3 , in an amount of 13% by weight
- Soda water glass M 3.3 ± 0.1 with a density of 1.40 g/cm3 at 44% by weight,
- Soda water glass M 2.5 ± 0.1 with a density of 1.46 g/cm3 at 43% by weight,
consisting of 46.5 per cent by weight of binder, iron red at 2 per cent by weight, quartz flour at 12 per cent by weight and aluminosilicates at 39.5 per cent by weight. The density of the adhesive at 20°C [g/cm3] is 1.6 - 2.0.

The strength of bonded joints using an adhesive of the above composition was investigated. The tests were carried out in two variants. In the first, halves of figure-eight and longitudinal fittings were glued together, which were obtained by tearing, meaning that the glued surfaces were developed. In the second variant, the halves of the shaped pieces were glued together, which were formed by partitioning or cutting the mass with a knife after compaction in the uncured state, resulting in smooth surfaces. After the adhesive was applied to the bonded surfaces, the fittings were left to cure the joints. The tensile and flexural strengths of the fabricated joints were determined after an appropriate curing time. The results of the measurements carried out are shown in Tables 1 and 2.

**Table 1. Test results for the strength of bonded joints - developed cross-sectional area resulting from the rupture of the fitting.**

| Curing time [h] | Rmu [MPa] | | | | Rgu [MPa] | | | |
|---|---|---|---|---|---|---|---|---|
| | P1 | P2 | P3 | Average | P1 | P2 | P3 | Average |
| 2 | 0,19 | 0,22 | 0,22 | 0,21 | 0,72 | 1,18 | 0,87 | 0,93 |
| 3 | 0,26 | 0,54 | 0,42 | 0,41 | 1,64 | 1,14 | 1,11 | 1,30 |
| 4 | 0,47 | 0,30 | 0,57 | 0,45 | 2,06 | 1,61 | 1,73 | 1,80 |
| 6 | 0,89 | 1,11 | 1,05 | 1,02 | 2,25 | 1,54 | 1,89 | 1,89 |
| 24 | 1,32 | 1,00 | 1,54 | 1,29 | 1,58 | 2,39 | 2,19 | 2,05 |

**Table 2. Results of tests on the strength of bonded joints - smooth cross-sectional area resulting from the separation or cutting of an uncured fitting.**

| Curing time [h] | *R*mu | | | [MPa]. | *R*gu | | | [MPa]. |
|---|---|---|---|---|---|---|---|---|
| | P1 | P2 | P3 | Average | P1 | P2 | P3 | Average |
| 1 | 0,098 | 0,115 | 0,11 | 0,11 | 0,354 | 0,346 | | 0,35 |
| 2 | 0,17 | 0,15 | 0,25 | 0,19 | 0,55 | 0,48 | | 0,52 |
| 3 | 0,22 | 0,36 | 0,31 | 0,30 | 0,71 | 0,92 | | 0,81 |
| 4 | 0,41 | 0,37 | 0,34 | 0,37 | 0,90 | 1,46 | 0,87 | 1,08 |
| 6 | 0,65 | 0,67 | 0,65 | 0,66 | 1,56 | 1,50 | 1,68 | 1,58 |
| 24 | 1,30 | 0,95 | 1,23 | 1,16 | 1,94 | 2,06 | 2,19 | 2,06 |

### Example IV

A binder-based adhesive containing:
- aqueous potassium glass M 3,0 - 3,4 with a density of 1,42 g/cm3 , in an amount of 15 % by weight
- Soda water glass M 3.3 ± 0.1 with a density of 1.33 g/cm3 at 50% by weight,
- Soda water glass M 2.5 ± 0.1 with a density of 1.45 g/cm3 at 35% by weight,
consisting of 50% by weight of binder, iron red at 3% by weight, quartz flour at 20% by weight and kaolin at 27% by weight.

The resulting adhesive has the consistency of liquid cream. Its drying time is approximately 2 h. Complete curing is achieved after 24 h.

Measurements of the adhesive's tensile strength in relation to the setting time are shown below:
After 1 hr: 0.4 - 0.6 MPa
After 3 h: 1.2 - 1.5 MPa
After 24 h: >2.6 MPa - sample breaks off outside the bonding area.

The glue is best suited for bonding small areas and filling gaps in the casting.

### Example V

A binder-based adhesive containing:
- aqueous potassium glass M 3,0 - 3,4 with a density of 1,40 g/cm3 , in an amount of 5 % by weight
- Soda water glass M 3.3 ± 0.1 with a density of 1.33 g/cm3 at 35% by weight,
- Soda water glass M 2.5 ± 0.1 with a density of 1.45 g/cm3 , 60% by weight,
consisting of 60% by weight of binder, iron red at 1% by weight, quartz flour at 9% by weight and kaolin at 30% by weight.

The resulting adhesive has the consistency of a thick pasty substance. The drying time of the adhesive is approximately 30 min. The final bond strength is obtained after 24 hours.

Measurements of the adhesive's tensile strength in relation to the setting time are shown below:
After 1h: 1.0 - 1.2 MPa
After 3h: 1.7 - 2.0 MPa
After 24h: >2.6 MPa

## Claims

1. An adhesive, especially for moulds and foundry cores containing hydrated sodium silicate, **characterised by** the fact that it consists of a binder composed of potassium water glass M 3.0 - 3.4 with a density of 1.38 to 1.42 g/cm³ in an amount of 5 to 15%, sodium water glass M 3.3 ± 0.1 with a density of 1,33 g/cm³ in an amount of 35 to 60% and sodium water glass M 2.5 ± 0.1 with a density of 1.45 g/cm³ in an amount of 35 to 60%, with a binder content of 20 to 60% by weight in the adhesive, in addition iron red in an amount of 0.5 to 3% by weight, quartz flour in an amount of 10 to 20% by weight and aluminosilicates in an amount of 30 to 40% by weight.

2. The adhesive according to claim. 1, **characterised in that** all free-flowing ingredients have a grinding degree of 160 to 220 mesh.

3. The adhesive according to claim. 1, **characterised in that** the aluminosilicates contain not less than 80% by weight of kaolinite.

4. The use of a binder consisting of potassium water glass M 3.0 - 3.4 with a density of 1.38 to 1.42 g/cm³ in an amount of 5 to 15%, sodium water glass M 3.3 ± 0.1 with a density of 1.33 g/cm³ in an amount of 35 to 60% and sodium water glass M 2.5 ± 0.1 with a density of 1.45 g/cm³ in an amount of 35 to 60% for the manufacture of adhesives, especially for moulds and casting cores.

5. The use according to claim. 3, **characterised by** the fact that 20 to 60% by weight of the binder is used to produce the adhesive.

6. The use according to claim. 3, **characterised by** the fact that, after preparation of the binder, the bulk components of the adhesive with a fineness of 160 to 220 mesh are added to it.
